# EUROPÄISCHE PATENTANMELDUNG

(11) **EP 4 745 172 A1**
(43) Veröffentlichungstag der Anmeldung: **20.05.2026**
(21) Anmeldenummer: 24213640.6
(22) Anmeldetag: 18.11.2024
(51) Int. Cl.: C08G 18/32, C08G 18/50, C08G 18/82, C08J 11/16, C08J 11/28, C08G 18/38, C08G 12/06

(54) **DEPOLYMERISIERBARE POLYMERE UND VERFAHREN ZUR DEPOLYMERISATION VON POLYMEREN**

(71) Anmelder: Universität Bielefeld, 33615 Bielefeld (DE)
(72) Erfinder: Prof. Dr. Gröger, Harald, 33739 Bielefeld (DE); Ceyhan, Haci-Kubilay, 33611 Bielefeld (DE); Wohlfahrt, Paulo Roberto, 33602 Bielefeld (DE)
(74) Vertreter: Michalski Hüttermann & Partner Patentanwälte mbB

(57) **Zusammenfassung**

Die vorliegende Erfindung betrifft Polymere, die eine Imineinheit in der Kette enthalten. Diese Imineinheit kann gezielt gespalten werden, z.B. durch Säure oder Umiminierung.

## Beschreibung

Die vorliegende Erfindung bezieht sich auf depolymerisierbare Polymere, d.h. Polymere, die gezielt in kleinere Einheiten zerlegbar und nach Möglichkeit wieder polymerisierbar sind sowie Verfahren zur Depolymerisation derartiger Polymere.

Polymere spielen im täglichen Leben eine nicht mehr wegzudenkende Rolle, jedoch hat aufgrund der Tatsache, dass viele Polymere nicht oder nur sehr schwer depolymerisierbar sind, die Umweltbelastung durch Polymere stark zugenommen. Lösungsansätze bestehen in Verfahren zur Depolymerisation sowie dem gezielten Design depolymerisierbarer Polymere. Allerdings sind bislang kaum solche Verfahren bzw. gezielt mit Blick auf eine spätere Depolymerisation entwickelte Polymere bekannt, was die Herausforderung dieses Lösungsansatzes unterstreicht. Zudem werden bei den wenigen bekannten Lösungsansätzen typischerweise Polyester verwendet, deren Spaltung aufgrund der Stabilität der Ester-Bindung mit erheblichem Aufwand verbunden ist. Eine Übersicht, die auch auf die Schwierigkeiten der Depolymerisation von bestehenden Polyestern eingeht, gibt C. Shi, E. C. Quinn, W. T. Diment, E. Y.-X. Chen, Chem. Rev. 2024, 124, 4393-4478.

Somit besteht der Bedarf, depolymerisierbare Polymere sowie Verfahren zur gezielten Depolymerisation von Polymeren und es stellt sich für den Fachmann die Aufgabe, derartige Polymere und Verfahren bereitzustellen.

Diese Aufgabe wird durch ein Polymer gemäß Anspruch 1 gelöst.

Demgemäß wird ein Polymer bereitgestellt, umfassend mindestens einen Abschnitt mit einer sich wiederholenden Einheit [im Folgenden der Einfachheit halber "Abschnitt" genannt], welche eine Imingruppe umfasst.

Überraschend hat sich herausgestellt, dass es bei vielen Anwendungen möglich ist, diese Imingruppen gezielt für die Polymerisation zu nutzen sowie durch geeignete Reaktionen eine erneute Polymerisation durchzuführen, während die Polymere ansonsten weiterhin die gleichen oder im Wesentlichen die gleichen Eigenschaften behalten.

Unter dem Begriff "Imingruppe" wird insbesondere die Einheit R'R"C=NR‴ verstanden, wobei R' und R‴ organische Reste sowie R" Wasserstoff oder ein organischer Rest darstellen.

R" ist insbesondere ausgewählt aus Wasserstoff oder C₁-C₄-Alkyl, bevorzugt Methyl. In diesem Fall sind dann die Reste R' und R‴ Teil des Polymerrückgrats.

Innerhalb dieser Anmeldung bedeuten die Reste R' und/oder Rⁿ etc. immer dieselbe chemische Einheit, es sei denn es wird explizit darauf hingewiesen.

Gemäß einer bevorzugten Ausführungsform umfasst der Abschnitt zwei oder mehr Imingruppen.

Gemäß einer bevorzugten Ausführungsform ist ein Kohlenstoffatom in α-Stellung zum Kohlenstoffatom der Imingruppe (d.h. als Teil der Reste R' oder R") unsubstitutiert oder Teil eines (hetero)aromatischen Rings.

Für den Fall, dass Rest R" nicht Wasserstoff ist, ist es bevorzugt, dass beide Kohlenstoffatome in α-Stellung zum Kohlenstoffatom der Imingruppe unsubstitutiert oder Teil eines (hetero)aromatischen Rings sind.

Dies hat sich als vorteilhaft herausgestellt, da so insbesondere oftmals die Stabilität des Polymers erhöht wird, bei gleichzeitig weiterhin akzeptabler Depolymerisierbarkeit.

Gemäß einer bevorzugten Ausführungsform ist das Kohlenstoffatom in α-Stellung zum Stickstoff der Imingruppe (= Rest R‴) Teil eines (hetero)aromatischen Rings und/oder besitzt eine elektronenziehenden oder verzweigten aliphatischen Substituenten.

Dies hat sich als vorteilhaft herausgestellt, da so ebenfalls insbesondere oftmals die Stabilität des Polymers erhöht wird, bei gleichzeitig weiterhin akzeptabler Depolymerisierbarkeit.

Unter dem Begriff "elektronenziehenden Substituenten" werden dabei insbesondere Substituenten verstanden, die die Elektronendichte am betreffenden Kohlenstoffatom verringern. Bevorzugte elektronenziehende Substituenten sind dabei Halogenatome.

Unter dem Begriff "verzweigter aliphatischer Substituent" wird insbesondere eine Alkylgruppe verstanden, die (im Ergebnis) in β- oder γ- Stellung zum Stickstoff der Imingruppe alkyl- oder arylsubstituiert ist. Bevorzugte Substituenten sind dabei *tert*-Butyl, Isopropyl, Neopentyl, Isobutyl, Mesityl, Toluoyl.

Gemäß einer bevorzugten Ausführungsform ist das Kohlenstoffatom in α-Stellung zum Stickstoff der Imingruppe (= Rest R‴) Teil eines (hetero)aromatischen Rings oder besitzt eine elektronenziehenden oder verzweigten aliphatischen Substituenten.

Gemäß einer bevorzugten Ausführungsform umfasst der Abschnitt eine Ester-, Amid-, Urethan-, Harnstoff- oder Carbonat-Gruppe.

Gemäß einer bevorzugten Ausführungsform hat der Abschnitt die folgende Struktur:

-CR₁=N-R₂-N=CR₃-R₄-

wobei R₁und R₃ unabhängig voneinander ausgewählt sind aus Wasserstoff oder C₁-C₄-Alkyl sowie R₂ und R₄ unabhängig voneinander unsubstituierte oder alkylsubstituierte Alkylgruppen sind, welche von aromatischen oder heteroaromatischen Einheiten, Ester,- oder Ethergruppen unterbrochen sein können, wobei -O-O-Bindungen ausgeschlossen sind, sowie unsubstituiertem oder alkylsubstiuertem Aryl oder 5- oder 6-Ring Heteroaryl.

Besonders bevorzugt ist R₁ und R₃ Wasserstoff oder Methyl, sowie R₂ und R₄ unabhängig aus C₅ bis C₂₀ Alkyl.

Gemäß einer bevorzugten Ausführungsform hat der Abschnitt die folgende Struktur:

-R₅-CR₁=N-R₂-N=CR₃-R₄-W-R₆₋W-

wobei R₁ is R₄ wie oben definiert sind, W für jedes W unabhängig ausgewählt ist aus -O-C(O)-, -C(O)-O, O-C(O)-O, NH-C(O)-, -C(O)-NH-, -NH-C(O)-O-, -O-C(O)-NH- und -NH-C(O)-NH-, sowie R₅ und R₆ unabhängig ausgewählt sind aus unsubstituiertem oder alkylsubstituierten Alkyl, welche von aromatischen oder heteroaromatischen oder Ethergruppen unterbrochen sein können, wobei -O-O-Bindungen ausgeschlossen sind, Aryl oder Heteroaryl.

Gemäß einer bevorzugten Ausführungsform ist dabei R₁ und R₃ Wasserstoff oder Methyl.

Gemäß einer bevorzugten Ausführungsform ist R₂ ausgewählt aus unsubstituiertem oder substituiertem C₂ bis C₁₀-Alkyl
Gemäß einer bevorzugten Ausführungsform ist R₄ ausgewählt aus C₂ bis C₈-Alkyl oder unsubstituiertes oder phenylsubstituiertes Aryl.

Gemäß einer bevorzugten Ausführungsform sind R₅ und R₆ unabhängig voneinander ausgewählt aus unsubstituiertem oder alkylsubstituiertem Aryl oder 5- oder 6-Ring Heteroaryl.

Besonders bevorzugt sind R₅ und R₆ methylsubstiuiertes Furan.

W ist bevorzugt -O-C(O)-, -C(O)-O, -NH-C(O)-O- und -O-C(O)-NH-.

Gemäß einer bevorzugten Ausführungsform hat der Abschnitt die folgende Struktur:

-R₂-N=CR₁-R₄-W-R₅-U-R₇-U-R₈-W-R₄-CR₃=N-R₂₋W-R₆-W-

Wobei U ausgewählt ist aus C(O)-, -O-C(O)- und -NH-C(O)- und R₇ ausgewählt ist aus Diol oder Polyol (so dass eine Ester- Carbonat oder Urethaneinheit entsteht).

Bevorzugt ist U ausgewählt aus -NH-C(O)-.

Bevorzugt ist R₇ ausgewählt aus PEG, PPG, PTHF, Polyesterpolyole, Glycerin, Trimethylolpropan, Pentaerythrit, Sorbit, Ketosen oder Hexosen.

Über freie Hydroxygruppen in R₇ kann dabei eine weitere Funktionalisierung oder Quervernetzung erfolgen.

Die vorliegende Erfindung bezieht sich außerdem auf ein Verfahren zur Depolymerisation von erfindungsgemäßen Polymeren, umfassend den Schritt:
- Versetzen mit wässriger Säure.

Es hat sich herausgestellt, dass so eine gezielte Spaltung der Iminbindung erfolgt. Nach Neutralisation kann dann bei den meisten Polymeren eine erneute Polymerisation erfolgen.

Als wässrige Säure kommen Mineralsäuren wie Salzsäure, Schwefelsäure, Phosphorsäure, sowie organische Säuren wie Ameisensäure, Essigsäure, Zitronensäure sowie Sulfonsäuren wie Toluolsulfonsäure, und Lewis-Säuren wie FeCl₃, AlCl₃, Zinkchlorid, oder Metaltriflate im Konzentrationsbereich zwischen 0.01 M bis 1 M in Frage. Zudem sind auch der Einsatz von heterogenen immobilisierten Säuren (z.B Amberlyst^{®}15, Bentonit) denkbar.

Die vorliegende Erfindung bezieht sich außerdem auf ein Verfahren zur Depolymerisation von erfindungsgemäßen Polymeren, umfassend den Schritt:
- Versetzen mit Amin

Es hat sich herausgestellt, dass so durch um Um-Iminierung eine gezielte Spaltung der Iminbindung erfolgt.

Hierzu wird bevorzugt das Amin im Überschuss, bezogen auf die im Polymer vorhandenen Imineinheiten eingesetzt, bevorzugt im 5-10 molaren Überschuss. Wenn es sich bei dem Amin um eine Flüssigkeit handelt, kann die Reaktion bevorzugt ohne weiteres Lösemittel durchgeführt werden, ansonsten werden dipolar aprotische Lösemittel bevorzugt.

Bevorzugt wird die Reaktion für 1h bis 4h durchgeführt. Die bevorzugte Reaktionstemperatur beträgt ≥ 20°C bis ≤80°C, bevorzugt ≥ 40°C bis ≤ 60°C.

Bevorzugt wird ein solches Amin eingesetzt, aus dem dann das ursprüngliche Polymer auf einfache Weise wieder erhalten werden kann (s. die nachfolgende Beschreibung der Beispiele).

Die vorliegende Erfindung bezieht sich außerdem auf ein Verfahren zur Depolymerisation von erfindungsgemäßen Polymeren, umfassend den Schritt:
- Versetzen mit wässriger Ammoniaklösung

Es hat sich herausgestellt, dass so zunächst eine Umiminisierung erfolgt, wobei formal eine C=NH₂-Einheit entsteht, welche aber in wässriger Lösung instabil ist, so dass das endgültige Reaktionsprodukt die Carbonyleinheit ist.

Durch erneute Iminbildung kann dann das ursprüngliche Polymer wieder erhalten werden.

Bevorzugt wird 1M bis 5M NH₃- Lösung verwendet.

Bevorzugt wird die Reaktion für 1h bis 4h durchgeführt. Die bevorzugte Reaktionstemperatur beträgt ≥ 20°C bis ≤80°C, bevorzugt ≥ 40°C bis ≤ 60°C.

Die vorliegende Erfindung bezieht sich somit auch auf eine Verwendung der erfindungsgemäßen Polymere für einen oder mehrere der folgenden Anwendungsbereiche:
- Schuhsohlen, insbesondere als Material für die Innensohle, Zwischensohle, Laufsohle
- Matratzen/Polstermaterial
- Klebstoffe
- Kabelummantelungen
- Bodenbeläge
- Isolierungsmaterial/Dicht- und Dämmstoffe
- Farben & Lacke
- Textilstoffe

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus den nachfolgenden Beispielen, die rein illustrativ und nicht als beschränkend anzusehen sind.

In den Zeichnungen zeigt
Fig. 1 die GPC-Molmassenanalyse eines erfindungsgemäßen Polymeredukts vor der Polymerisation zum Polyurethan sowie des erfindungsgemäßen Polymers nach Herstellung sowie nach der Depolymerisation.
Fig. 2 eine TGA-Analyse eines erfindungsgemäßen Polymers nach Beispiel 9a
Fig. 3 eine TGA- Analyse eines erfindungsgemäßen Polymers nach Beispiel 9b

### Beispiele 1 bis 7: Synthese von Polyurethanen

Beispiele 1 bis 7 beziehen sich auf Polyurethane, die durch Umsetzung von Diolen gemäß Formel (I) mit Hexamethylendiisocyanat (HDI) hergestellt wurden. 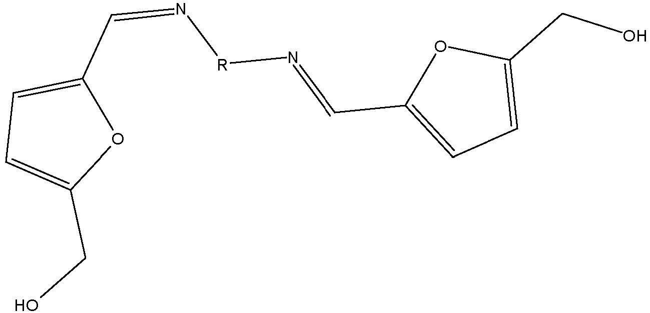 mit folgender Auswahl für R:

| Beispiel No. | R |
|---|---|
| 1 | Ethyl |
| 2 | *n*-Propyl |
| 3 | *n*-Butyl |
| 4 | *n*-Pentyl |
| 5 | *n*-Hexyl |
| 6 | 2,4-TDA |
| 7 | 4,4'-MDA |

Dabei wurde für die Beispiele 1 bis 5 folgendes Verfahren angewandt:
1 g 5-HMF (4,4 mmol) wird bei 40°C geschmolzen und 0,5 molare Äquivalente des primären aliphatischen Diamins werden mit einer Eppendorf-Pipette hinzugefügt. Die Mischung wird bei 40°C gerührt, bis sich ein Feststoff bildet.

### (((1E,1'E)-(ethane-1,2-diylbis(azaneylylidene))bis(methaneylylidene))bis(furan-5,2-diyl)) dimethanol (Beispiel 1)

**¹H NMR (500 MHz, DMSO) δ [ppm]:** 8.11 (s, 1H), 6.82 (d, *J* = 3.3 Hz, 1H), 6.41 (d, *J* = 3.3 Hz, 1H), 5.37 (s, 1H), 4.42 (s, 2H), 3.78 (s, 2H).
**¹³C NMR (126 MHz, DMSO) δ [ppm]:** 158.37, 151.15, 151.04, 115.86, 109.32, 61.72, 56.23.
**FTIR υ [cm⁻¹]:** 3300 cm⁻¹, 3100 cm⁻¹, 2950 cm⁻¹, 2850 cm⁻¹, 1646 cm⁻¹, 1525 cm⁻¹, 1022cm⁻¹
**ESI-MS positiver Ionen Modus m/z:** 277.119 [C₁₄H₁₆N₂O₄H⁺]

### (((1E,1'E)-(propane-1,3-diylbis(azaneylylidene))bis(methaneylylidene))bis(furan-5,2-diyl))dimethanol (Beispiel 2)

**¹H NMR (500 MHz, DMSO) δ [ppm]:** 8.12 (s, 2H), 6.82 (d, *J =* 3.3 Hz, 2H), 6.42 (d, *J =* 3.3 Hz, 2H), 5.3 8 (d, *J* = 7.0 Hz, 2H), 4.43 (d, *J* = 3.7 Hz, 4H), 3.55 (t, *J* = 6.9 Hz, 4H), 1.90 (p, *J* = 6.9 Hz, 2H).
**¹³C NMR (126 MHz, DMSO) δ [ppm]:**158.29, 151.14, 150.37, 115.62, 109.29, 58.96, 56.24, 32.40.
**FTIR υ [cm⁻¹]:** 3300 cm⁻¹, 3100 cm⁻¹, 2950 cm⁻¹, 2850 cm⁻¹, 1646 cm⁻¹, 1525 cm⁻¹, 1022cm⁻¹
**ESI-MS positiver Ionen Modusm/z:** 313.078 (C₁₅H₁₈N₂O₄Na⁺)

### (((1E,1'E)-(butane-1,4-diylbis(azaneylylidene))bis(methaneylylidene))bis(furan-5,2-diyl))dimethanol (Beispiel 3)

**¹H NMR (500 MHz, DMSO) δ [ppm]:** 8.09 (s, 1H), 6.80 (d, 1H), 6.40 (d, *J =* 3.3 Hz, 1H), 3.50 (t, *J =* 6.2 Hz, 2H), 1.59 (p, 2H).
**¹³C NMR (126 MHz, DMSO) δ [ppm]:** 158.22, 151.16, 149.92, 115.39, 109.25, 60.85, 56.23, 28.69.
**FTIR υ [cm⁻¹]:** 3300 cm⁻¹, 3100 cm⁻¹, 2950 cm⁻¹, 2850 cm⁻¹, 1646 cm⁻¹, 1525 cm⁻¹, 1022cm⁻¹
**ESI-MS positiver Ionen Modusm/z:** 327.101 (C₁₆H₂₀N₂O₄Na⁺)

### (((1E,1'E)-(pentane-1,5-diylbis(azaneylylidene))bis(methaneylylidene))bis(furan-5,2-diyl))dimethanol (Beispiel 4)

**¹H NMR (500 MHz, DMSO) δ [ppm]:** 8.09 (s, 2H), 6.79 (d, *J* = 3.3 Hz, 2H), 6.39 (d, *J* = 3.3 Hz, 2H), 5.35 (s, 2H), 4.41 (s, 4H), 3.48 (t, 4H), 1.60 (p, *J* = 7.0 Hz, 4H), 1.32 (p, *J =* 6.3 Hz, 2H).
**¹³C NMR (126 MHz, DMSO) δ [ppm]:** 158.20, 151.17, 150.00, 115.39, 109.26, 61.09, 56.24, 30.80, 25.00.
**FTIR υ [cm⁻¹]:** 3300 cm⁻¹, 3100 cm⁻¹, 2930 cm⁻¹, 2860 cm⁻¹, 1646 cm⁻¹, 1525 cm⁻¹, 1020cm⁻¹
**ESI-MS positiver Ionen Modusm/z:** 341.147 [C₁₇H₂₂N₂O₄Na⁺]

### (((1E,1'E)-(hexane-1,6-diylbis(azaneylylidene))bis(methaneylylidene))bis(furan-5,2-diyl))dimethanol (Beispiel 5)

**¹H NMR (500 MHz, DMSO) δ [ppm]:** 8.09 (s, 2H), 6.80 (d, *J =* 3.3 Hz, 2H), 6.41 (d, *J =* 3.3 Hz, 2H), 5.3 6 (t, 2H), 4.43 (d, *J* = 5.8 Hz, 4H), 3.49 (t, *J* = 1.4 Hz, 4H), 1.58 (p, *J* = 6.5 Hz, 4H), 1.33 (p, 4H).
**¹³C NMR (126 MHz, DMSO) δ [ppm]:** 158.19, 151.18, 149.94, 115.37, 109.26,61.14,56.24, 30.96, 27.06.
**FTIR υ [cm⁻¹]:** 3300 cm⁻¹, 3100 cm⁻¹, 2930 cm⁻¹, 2860 cm⁻¹, 1658 cm⁻¹, 1525 cm⁻¹, 1020cm⁻¹
**ESI-MS positiver Ionen Modusm/z:** 355.163 [C₁₈H₂₄N₂O₄Na⁺]

Für die Beispiele 6 und 7 wurde folgendes Verfahren angewandt:
5-Hydroxymethyl-2-Furfural (5-HMF)(4,4mmol) wird bei 40°C geschmolzen und 0,5 molare Äquivalente des primären aromatischen Diamins mit einer Eppendorfpipette zugegeben. Die Mischung wird auf 140°C erhitzt, bis sich eine viskose Flüssigkeit bildet.

### ((((1E,1'E)-(4-methyl-1,3-phenylene)bis(methaneylylidene))bis(azaneylylidene))bis(furan-5,2-diyl))dimethanol (Beispiel 6)

**¹H NMR (500 MHz, DMSO) δ [ppm]:** 8.48 (s, 1H), 8.35 (s, 1H), 7.24 (d, *J* = 8.0 Hz, 1H), 7.09 (d, *J =* 3.3 Hz, 1H), 6.52 (dd, *J =* 13.1, 7.9, 3.4 Hz, 2H), 4.55 - 4.48 (m, 4H), 2.29 (s, 3H).
**¹³C NMR (126 MHz, DMSO) δ [ppm]:** 159.70, 159.56, 151.72, 151.66, 151.62, 150.31, 148.75, 148.02, 131.23, 129.96, 118.50, 110.39, 109.98, 109.92, 109.05, 56.36, 17.81.
**FTIR υ [cm⁻¹]:** 3250 cm⁻¹, 3120 cm⁻¹, 3024cm⁻¹, 2940 cm⁻¹, 2860 cm⁻¹, 1620 cm⁻¹, 1573 cm⁻¹, 1530 cm⁻¹, 1485 cm⁻¹, 1015 cm⁻¹, 876cm⁻¹
**ESI-MS positiver Ionen Modusm/z:** 361.064 (C₁₉H₁₈N₂O₄Na⁺)

### (((1E,1'E)-((methylenebis(4,1-phenylene))bis(azaneylylidene))bis(methaneylylidene))bis(furan-5,2-diyl))dimethanol (Beispiel 7)

**¹H NMR (500 MHz, DMSO) δ [ppm]:** 8.38 (s, 1H), 7.27 (d, *J =* 8.0 Hz, 2H), 7.19 (d, *J =* 8.1 Hz, 2H), 7.05 (d, *J* = 3.4 Hz, 1H), 6.51 (d, *J =* 3.5 Hz, 1H), 5.44 (t, *J =* 5.9 Hz, 1H), 4.48 (d, *J* = 6.0 Hz, 2H), 3.95 (s, 1H).
**¹³C NMR (126 MHz, DMSO) δ [ppm]:** 159.55, 151.68, 149.57, 147.98, 139.72, 129.98, 129.73, 129.61, 121.55, 121.37, 118.54, 109.89, 56.34.
**FTIR υ [cm⁻¹]:** 3275 cm⁻¹, 3126 cm⁻¹, 3020 cm⁻¹, 2930 cm⁻¹, 2840 cm⁻¹, 1620 cm⁻¹, 1614 cm⁻¹, 1507 cm⁻¹, 1496 cm⁻¹, 1010 cm⁻¹, 959 cm⁻¹, 871 cm⁻¹, 800 cm⁻¹
**ESI-MS positiver Ionen Modusm/z:** 415.124 (C₂₅H₂₂N₂O₄H⁺)

Die erhaltenen Diole wurden thermometrisch untersucht, die Ergebnisse sind in Tabelle 1 zu sehen:

**Tabelle 1. Thermische Übergangsereignisse der Diole lt. Beispiel 1 bis 7, abgeleitet aus der DSC-Analyse zwischen 25°C und 300°C für die Substanzen 1, 2, 3 und 5 und von -50°C bis 300°C für die Substanzen 4, 6 und 7. Die Analyse wurde unter N₂-Atmosphäre mit einer Aufheiz-/Abkühlrate von 20°C/min durchgeführt.**

| **Thermische Daten der Diole lt. Beispiel 1 bis 7** | | | | | | | |
|---|---|---|---|---|---|---|---|
| **Beispiel** | **1** | **2** | **3** | **4** | **5** | **6** | **7** |
| Tm | 163 | 127 | 163 | 68 | 130 | 124 | - |
| T_{b} | - | - | - | 144 | - | - | - |
| T_{d} | 238 | 262 | 250 | 256 | 270 | 284 | 288 |
| T_{g} | - | - | - | -40 | - | 8 | 32 |
| Tₘ: melting point, T_{b}: boiling point, T_{d}: decomposition temperature, T_{g}: glass transition temperature | | | | | | | |

Die Diole wurden anschließend gemäß des folgenden Verfahrens polymerisiert:
1 g des Diols wird in 20 ml DMSO bei 40°C gelöst und 1 Moläquivalent des Hexamethylendiisocyanats mit einer Eppendorf-Pipette zugegeben, um die Polymerisationsreaktion zu starten. Nach 2 Stunden wurde die zähflüssige Lösung in ein Gefäß mit 100 ml D.I.-Wasser gegossen, um das feste Polymer auszufällen.

### Polyurethan lt. Beispiel 1

**¹H NMR (500 MHz, DMSO) δ [ppm]:** 8.13 (s, 1H), 7.27 (s, 1H), 6.84 (s, 1H), 6.57 (s, 1H), 4.97 (s, 2H), 3.78 (s, 2H), 2.95 (d, *J =* 8.4 Hz, 2H), 1.35 (s, 2H), 1.21 (s, 2H).
**FTIR υ [cm⁻¹]:** 3312 cm⁻¹, 3127 cm⁻¹, 3060 cm⁻¹, 2936 cm⁻¹, 2857 cm⁻¹, 1700 cm⁻¹, 1645 cm⁻¹, 1531 cm⁻¹, 1436 cm⁻¹, 1249 cm⁻¹, 1130 cm⁻¹, 1022 cm⁻¹

### Polyurethan lt. Beispiel 2

**¹H NMR (500 MHz, DMSO) δ [ppm]:** 8.14 (s, 1H), 7.28 (s, 1H), 6.85 (s, 1H), 6.58 (s, 1H), 4.99 (s, 2H), 3.55 (t, *J =* 6.7 Hz, 2H), 2.96 (s, 2H), 1.93 - 1.87 (m, 1H), 1.36 (s, 3H), 1.22 (s, 3H).
**FTIR υ [cm⁻¹]:** 3306 cm⁻¹, 3133 cm⁻¹, 3060 cm⁻¹, 2936 cm⁻¹, 2857 cm⁻¹, 1682 cm⁻¹, 1644 cm⁻¹, 1537 cm⁻¹, 1451 cm⁻¹, 1255 cm⁻¹, 1130 cm⁻¹, 1022 cm⁻¹

### Polyurethan lt. Beispiel 3

**¹H NMR (500 MHz, DMSO) δ [ppm]:** 8.12 (d, *J* = 6.1 Hz, 1H), 7.26 (s, 1H), 6.84 (s, 1H), 6.58 (s, 1H), 4.98 (d, *J* = 4.6 Hz, 2H), 3.53 (s, 2H), 2.96 (s, 3H), 1.60 (s, 2H), 1.36 (s, 2H), 1.22 (s, 2H).
**FTIR υ [cm⁻¹]:** 3305 cm⁻¹, 3133 cm⁻¹, 3060 cm⁻¹, 2936 cm⁻¹, 2857 cm⁻¹, 1683 cm⁻¹, 1645 cm⁻¹, 1538 cm⁻¹, 1254 cm⁻¹, 1130 cm⁻¹, 1015 cm⁻¹

### Polyurethan lt. Beispiel 4

**¹H NMR (500 MHz, DMSO) δ [ppm]:** 8.10 (s, 1H), 7.26 (s, 1H), 6.82 (s, 1H), 6.57 (s, 1H), 4.98 (s, 2H), 3.49 (s, 2H), 2.96 (d, *J =* 7.9 Hz, 2H), 1.60 (s, 2H), 1.36 (s, 4H), 1.21 (s, 2H).
**FTIR υ [cm⁻¹]:** 3305 cm⁻¹, 3133 cm⁻¹, 3060 cm⁻¹, 2936 cm⁻¹, 2857 cm⁻¹, 1686 cm⁻¹, 1646 cm⁻¹, 1538 cm⁻¹, 1256 cm⁻¹, 1130 cm⁻¹, 1015 cm⁻¹

### Polyurethan lt. Beispiel 5

**¹H NMR (500 MHz, DMSO) δ [ppm]:** 8.10 (s, 1H), 7.25 (d, *J* = 19.1 Hz, 1H), 6.83 (s, 1H), 6.59 (d, *J =* 17.6 Hz, 1H), 4.98 (s, 2H), 3.49 (d, *J =* 7.1 Hz, 2H), 3.07 - 2.77 (m, 2H), 1.57 (s, 2H), 1.43 - 0.96 (m, 7H).
**FTIR υ [cm⁻¹]:** 3305 cm⁻¹, 3133 cm⁻¹, 3060 cm⁻¹, 2936 cm⁻¹, 2857 cm⁻¹, 1686 cm⁻¹, 1651 cm⁻¹, 1538 cm⁻¹, 1256 cm⁻¹, 1130 cm⁻¹, 1015 cm⁻¹

### Polyurethan lt. Beispiel 6

**FTIR υ [cm⁻¹]:** 3318 cm⁻¹, 3160 cm⁻¹, 3060 cm⁻¹, 3011 cm⁻¹, 2936 cm⁻¹, 2850 cm⁻¹, 1696 cm⁻¹, 1625 cm⁻¹, 1537 cm⁻¹, 1241 cm⁻¹, 1128 cm⁻¹, 1015 cm⁻¹, 949 cm⁻¹, 879 cm⁻¹

### Polyurethan lt. Beispiel 7

**FTIR υ [cm⁻¹]:** 3335 cm⁻¹, 3120 cm⁻¹, 3025 cm⁻¹, 2936 cm⁻¹, 2850 cm⁻¹, 1698 cm⁻¹, 1625 cm⁻¹, 1498 cm⁻¹, 1241 cm⁻¹, 1128 cm⁻¹, 1015 cm⁻¹, 959 cm⁻¹, 798 cm⁻¹

Tabelle 2 zeigt die thermischen Eigenschaften und die Molmassenverteilung der Polyurethane gemäß der Beispiel 1 bis 7:

**Tabelle 2: Thermische Eigenschaften und Molmassenverteilung der Polyurethane gemäß Beispiel 1 bis 7**

| **Thermische Eigenschaften und Molmassenverteilung** | | | | | | | |
|---|---|---|---|---|---|---|---|
| **Polyurethan** | **1** | **2** | **3** | **4** | **5** | **6** | **7** |
| **T_{g}[°C]** | 30 | 41 | - | 56 | 49 | 30 | 80 |
| **Tₘ [°C]** | - | - | 170 | 160 | - | - | - |
| **T_{d}^{5%}** | 160 | 118 | 237 | 175 | 194 | 105 | 120 |
| **T_{d}^{30%}** | 290 | 270 | 400 | 350 | 425 | 260 | 290 |
| **Mₙ [g/mol]** | 3661 | 3573 | 8377 | 7203 | 7794 | 3427 | 2925 |
| **M_{w} [g/mol]** | 5526 | 6308 | 8681 | 14529 | 12369 | 4701 | 7528 |
| **Mₙ/M_{w}** | 1.5 | 1.8 | 1.1 | 2.0 | 1.6 | 1.4 | 2.6 |

### Depolymerisation der Polyurethane:

Zur Untersuchung der Depolymerisation wurde folgendes allgemeines Verfahren angewandt:
Das Polyurethan wurde in einem Mörser unter Verwendung von flüssigem Stickstoff gemahlen. 5,25 g des Polymers wurden in ein Falcon-tube eingewogen und 30 ml einer 0,25 M H₂SO₄-Lösung hinzugefügt. Die Suspension wurde bei 800 U/min in einem Thermoshaker bei 25°C geschüttelt. Nach 2 Stunden Schütteln wurden 100 µl der wässrigen Schicht in ein NMR-Röhrchen pipettiert und 10 µl des internen Standards Kaliumformiat (c = 0,5 mol/L) und 600 µl D₂O hinzugefügt, um die Menge des freigesetzten Diamins durch ¹H-NMR-Analyse zu quantifizieren.

Wenn die Zersetzungsrate ≥ 90 % erreichte, wurde die Suspension 10 Minuten lang bei 20000 U/min zentrifugiert und die obere wässrige Schicht abgezogen. Die untere feste Schicht (Dialdehyd-Monomer) wurde zweimal mit 30 ml D.I. Wasser gewaschen und erneut zentrifugiert. Das Dialdehyd-Monomer wurde in einen Mörser überführt und bei 110°C 2 Stunden lang im Ofen getrocknet. Nach Bestimmung der Masse des Monomers wurde es in 20 ml DMSO bei 40°C gelöst und 1 Moläquivalent frisches Ethylendiamin hinzugefügt. Die Repolymerisation dauerte 2 Stunden, und die viskose DMSO-Lösung wurde in 150 ml D.I.-Wasser gegossen, um das Polymer auszufällen, das isoliert und 2 Stunden lang bei 80°C getrocknet wurde. Nach der Massenbestimmung begann der zweite Recyclingzyklus.

Tabelle 3 zeigt die Glasübergangstemparaturen und Molmassenverteilungen des Polyurethans gemäß Beispiel 1 innerhalb 10 Recyclingzyklen

**Tabelle 3: Glastemparaturen und Molmassenverteilungen des Polyurethans gemäß Beispiel 1 innerhalb 10 Recyclingzyklen.**

| **Recyclingzyklus** | **T_{g} [°C]** | **Mₙ [g/mol]** | **M_{w} [g/mol]** | **Q** |
|---|---|---|---|---|
| 0 | 30 | 7476 | 10827 | 1,5 |
| 1 | 33 | 11618 | 15918 | 1,4 |
| 2 | 32 | 7182 | 9284 | 1,3 |
| 3 | 37 | 9373 | 13246 | 1,4 |
| 4 | 38 | 7679 | 8553 | 1,1 |
| 5 | 57 | 8662 | 13813 | 1,6 |
| 6 | 33 | 7336 | 7648 | 1,1 |
| 7 | 65 | 10566 | 20167 | 1,9 |
| 8 | 49 | 7692 | 12777 | 1,7 |
| 9 | 42 | 6695 | 10416 | 1,6 |
| 10 | 55 | 9079 | 18201 | 2,0 |

### Beispiele 8 bis 25: Synthese von Polyurethanen

Die Beispiele beziehen sich auf Polyurethane, welche Polyethereinheiten enthalten. Zunächst wird die Synthese von geeigneten Diolvorstufen beschrieben:

### Schritt 1: Synthese von Polyetherpolyolen mit Imin-Sollbruchstelle

### Allgemeine Vorschrift

In einem Reaktionsgefäß werden 1 mol-Äquivalent Diisocyanat und 1 mol-Äquivalent einer Hydroxy- oder Carboxygruppenhaltigen Ketonverbindung, oder einer Hydroxyl- oder Carboxygruppenhaltigen Aldehydverbindung bei 50 °C umgesetzt. Die Reaktion kann durch den Zusatz tertiärer Amine beschleunigt werden, die in einer Konzentration von 0,1-20 mol-% eingesetzt werden. Zu dem auf diese Weise hergestellten Linker Molekül werden 0,5 mol-Äquivalente eines Diols oder einer Disäure gegeben. Das Reaktionsgemisch wird anschließend 5 Stunden bei 50 °C gerührt. Danach werden 2 mol-Äquivalente eines Aminoalkohols zugegeben, und das Reaktionsgemisch wird für weitere 2 Stunden bei 50 °C gerührt.

### Beispiel 8:

In einem Reaktionsgefäß werden 31.46g Isophorondiisocyanat (142mmol) und 16,5g 4-hydroxy-4-methyl-pentanon (142mmol) bei 50 °C umgesetzt. Dabei wird die Reaktion durch den Zusatz von 9mol% DABCO (6.4g, 28,4mmol) beschleunigt. (Stufe 1) Zu dem auf diese Weise hergestellten Linkermolekül werden 284g Polypropylenglycol 4000 zugesetzt. Das Reaktionsgemisch wird anschließend 5 Stunden bei 50 °C gerührt (Stufe 2). Danach werden 17.6g Ethanolamin (284 mmol) zugegeben, und das Reaktionsgemisch wird für weitere 2 Stunden bei 50 °C gerührt (Stufe 3).

### 2-Methyl-4-oxopentan-2-yl ((5-isocyanato-1,3,3-trimethylcyclohexyl)methyl)carbamate (Stufe 1):

**¹H NMR (500 MHz, DMSO) δ [ppm]:** 3.14, 2.12, 1.25 - 1.15, 1.01, 0.93.
**¹³C NMR (126 MHz, DMSO) δ [ppm]:** 208.75, 159.06, 158.16, 157.16, 156.44, 124.68, 78.15, 68.94, 56.35 - 56.19, 47.16, 42.76, 36.75, 35.51, 31.95, 30.04, 28.07, 27.35, 23.68.
**FTIR υ [cm⁻¹]:** 2947, 2934, 2248, 1702, 1558, 1463, 1378, 1362, 1305, 1255, 1216, 1170, 1145

### Produkt nach Umsetzung mit Polypropolenglycol (Stufe 2)

**¹H NMR (500 MHz, DMSO) δ [ppm]:** 3.57 - 3.36, 3.32, 2.50 (*J* = 10.8 Hz), 2.12, 1.15, 1.03 (*J* = 9.1 Hz).
**¹³C NMR (126 MHz, DMSO) δ [ppm]:** 208.80, 75.19 - 74.40, 72.81, 70.58, 68.97, 56.28, 32.56, 30.05, 17.74.
**FTIR υ [cm⁻¹]:** 2771, 2964, 2865, 1717, 1638, 1544, 1451, 1374, 1299, 1242, 1092, 1011, 942

### Diolkomponente (Stufe 3)

**¹H NMR (500 MHz, DMSO) δ [ppm]:** 3.57 - 3.47, 3.31, 1.90, 1.78, 1.20, 1.04 (*J* = 6.1 Hz), 0.93.
**FTIR υ [cm⁻¹]:** 2771, 2964, 2865, 1717, 1668, 1638, 1544, 1451, 1374, 1299, 1242, 1092, 1011, 942
**GPC-Molmassenverteilung [g/mol]:** Mₙ = 3884 M_{w} = 5343, Q = 1,32

### Beispiel 9:

In einem Reaktionsgefäß werden 9,78g Isophorondiisocyanat (44,4mmol) und 5,15g Lävulinsäure (44,4mmol) bei 50 °C umgesetzt. Dabei wird die Reaktion durch den Zusatz von 10mol% DABCO (1g, 0,9mmol) beschleunigt (Stufe 1). Zu dem auf diese Weise hergestellten Linkermolekül werden 22,2g Polyethylenglycol mit der zahlenmittleren Molmasse 1000 zugesetzt (Stufe 2). Das Reaktionsgemisch wird anschließend 5 Stunden bei 50 °C gerührt. Danach werden 5,51g Ethanolamin (88,8mmol) zugegeben, und das Reaktionsgemisch wird für weitere 2 Stunden bei 50 °C gerührt (Stufe 3).

### 3-oxobutyl ((5-isocyanato-1,3,3-trimethylcyclohexyl)methyl)carbamate (Stufe 1):

**¹H NMR (500 MHz, DMSO) δ [ppm]:** 2.68 - 2.57, 2.33, 2.25, 2.09, 1.15 - 0.64.
**¹³C NMR (126 MHz, DMSO) δ [ppm]:** 207.90 - 207.75, 174.79, 171.98, 170.43, 124.81-119.14, 47.53, 38.53, 36.41, 35.38, 32.17 - 31.83, 28.41 - 27.68, 23.68.
**FTIR υ [cm⁻¹]:** 2955, 2251, 1716, 1526, 1463, 1362, 1107

### Produkt nach Umsetzung mit Polypropolenglycol (Stufe 2)

**¹H NMR (500 MHz, DMSO) δ [ppm]:** 4.03, 3.52, 3.45 - 3.35, 2.64, 2.09, 1.99, 1.18, 0.99, 0.90 - 0.84.
**¹³C NMR (126 MHz, DMSO) δ [ppm]:** 207.83, 174.60, 171.89, 170.76, 72.83, 70.27, 60.69, 60.22, 47.11, 36.64, 35.47, 31.88, 30.71 - 28.55, 27.99, 23.67, 21.17, 14.52.
**FTIR υ [cm⁻¹]:** 2771, 2964, 2865, 1717, 1638, 1544, 1451, 1374, 1299, 1242, 1092, 1011, 942

### Diolkomponente (Stufe 3)

**¹H NMR (500 MHz, DMSO) δ [ppm]:** 3.56, 3.51, 3.42, 2.61, 1.21 - 0.66.
**FTIR υ [cm⁻¹]:** 2771, 2964, 2865, 1717, 1638, 1544, 1451, 1374, 1299, 1242, 1092, 1011, 942
**GPC-Molmassenverteilung [g/mol]:** Mₙ = 1682 M_{w} =1769, Q = 1,05

### Beispiel 10:

In einem Reaktionsgefäß werden 5,45g Isophorondiisocyanat (24,5mmol) und 2,99g Hydroxybenzaldehyd (24,5mmol) bei 50 °C umgesetzt. (Stufe 1) Zu dem auf diese Weise hergestellten Linkermolekül werden 12,3g Polyethylenglycol mit der zahlenmittleren Molmasse 1000 zugesetzt. Das Reaktionsgemisch wird anschließend 5 Stunden bei 50 °C gerührt (Stufe 2). Danach werden 3g Ethanolamin (49mmol) zugegeben, und das Reaktionsgemisch wird für weitere 2 Stunden bei 50 °C gerührt (Stufe 3).

### 4-formylphenyl ((5-isocyanato-1,3,3-trimethylcyclohexyl)methyl)carbamate (Stufe 1):

**¹H NMR (500 MHz, DMSO) δ [ppm]:** 9.98, 7.94, 7.35, 1.04 - 0.99.
**Produkt nach Umsetzung mit Polypropolenglycol (Stufe 2)**
**¹H NMR (500 MHz, DMSO) δ [ppm]:** 9.98, 8.06 - 7.85, 7.35, 4.05, 3.60 - 3.54, 1.13 - 0.82.
**FTIR υ [cm⁻¹]:** 3030, 2953, 2922, 2849, 2739, 1729, 1695, 1601, 1529, 1497, 1463, 1386, 1364, 1304, 1195, 1154, 989, 859, 840

### Diolkomponente (Stufe 3)

**¹H NMR (500 MHz, DMSO) δ [ppm]:** 8.11, 7.48, 7.27, 7.07 - 6.93, 6.70, 3.50, 1.13 - 0.76.
**FTIR υ [cm⁻¹]:** 3336, 2866, 1742, 1643, 1602, 1537, 1500, 1461, 1348, 1302, 1244, 1206, 1096, 990, 947, 841

### Synthese von weiteren Diolen mit Imin-Sollbruchstelle:

### Allgemeine Vorschrift

In einem Reaktionsgefäß werden 1 mol-Äquivalent einer Hydroxylhaltigen Ketonverbindung, oder einer Hydroxylhaltigen Aldehydverbindung mit 1 mol-Äquivalent Aminoalkohol bei 40-80 °C umgesetzt.

### Beispiel 11 (E)-2-(((5-(hydroxymethyl)furan-2-yl)methylene)amino)ethan-1-ol:

In einem Eppendorf-tube werden 116mg 5-Hydroxymethyl-2-Furfural (0,92mmol) eingewogen und 57mg Ethanolamin (0,92mmol) werden dazugegeben. Das Reaktionsgemisch wird für 2h bei 40°C bei 800rpm geschüttelt.
**¹H NMR (500 MHz, DMSO) δ [ppm]:** 8.06, 6.82, 6.41, 4.42, 3.61, 3.55.
**FTIR υ [cm⁻¹]:** 3300, 2935, 2870, 1644, 1588, 1530, 1497, 1361, 1332, 1281, 1195, 1066, 1015, 798
**EI-MS [m/z]:** 169 [M]^{+•}, 138 [M-CH₂OH]^{+•}

### Beispiel 12 (E)-2-(((4-(hydroxymethyl)furan-2-yl)methylene)amino)ethan-1-ol:

In einem Eppendorf-tube werden 204mg 4-Hydroxymethyl-2-Furfural (1,62mmol) eingewogen und 100,4mg Ethanolamin (1,62mmol) werden dazugegeben. Das Reaktionsgemisch wird für 2h bei 40°C bei 800rpm geschüttelt.
**¹H NMR (500 MHz, DMSO)** δ **[ppm]:** 8.07, 7.64, 6.84, 4.34, 3.57.
**FTIR υ [cm⁻¹]:** 3282, 2135, 2867, 1649, 1599, 1525, 1448, 1358, 1026
**EI-MS [m/z]:** 169 [M]^{+•}, 138 [M-CH₂OH]^{+•}

### Beispiel 13 (E)-4-(((2-hydroxyethyl)imino)methyl)phenol:

In einem Eppendorf-tube werden 96,54mg Hydroxybenzaldehyd (0,79mmol) eingewogen und 49,0mg Ethanolamin (0,79mmol) werden dazugegeben. Das Reaktionsgemisch wird für 2h bei 40°C bei 800rpm geschüttelt.
**¹H NMR (500 MHz, DMSO) δ [ppm]:** 8.15, 7.54, 6.78, 3.60, 3.54.
**FTIR υ [cm⁻¹]:** 3171, 2936, 2859, 1639, 1584, 1496, 1292, 1156, 1073, 1025, 842
**EI-MS [m/z]:** 165 [M]^{+•}, 134 [M-CH₂OH]^{+•}

### Beispiel 14 (E)-2-((2-hydroxyethyl)imino)propan-1-ol:

In einem Eppendorf-tube werden 111mg Hydroxyaceton (1,5mmol) eingewogen und 93mg Ethanolamin (1,5mmol) werden dazugegeben. Das Reaktionsgemisch wird für 2h bei 40°C bei 800rpm geschüttelt.
**¹H NMR (500 MHz, DMSO) δ [ppm]:** 3.70, 3.47, 2.83, 2.35, 0.95, 0.90.
**FTIR υ [cm⁻¹]:** 3292, 2940, 2869, 1648, 1452, 1378, 1051

### Beispiel 15 (E)-3-((2-hydroxyethyl)imino)-2-methylbutan-2-ol:

In einem Eppendorf-tube werden 104mg 4-Hydroxy-4-methylpentanon (0,90mmol) eingewogen und 56mg Ethanolamin (0,90mmol) werden dazugegeben. Das Reaktionsgemisch wird für 2h bei 40°C bei 800rpm geschüttelt.
**¹H NMR (500 MHz, DMSO) δ [ppm]:** 3.54, 3.21, 2.98, 2.08, 1.89, 1.77, 1.19.
**FTIR υ [cm⁻¹]:** 3274, 2979, 2940, 2876, 1664, 1434, 1371, 1244, 1035
**EI-MS [m/z]:** 159 [M]^{+•}, 86 [M-C₄H₉O] ^{+•}

### Beispiel 16 (E)-4-(1-((2-hydroxyethyl)imino)ethyl)phenol:

In einem Eppendorf-tube werden 103,8mg 4-Hydroxyacetophenon (0,76mmol) eingewogen und 47mg Ethanolamin (0,76mmol) werden dazugegeben. Das Reaktionsgemisch wird für 2h bei 40°C bei 800rpm geschüttelt.
**¹H NMR (500 MHz, DMSO) δ [ppm]:** 7.66, 6.73, 4.15, 3.67, 3.45, 2.13.
**FTIR υ [cm⁻¹]:** 3596-2280, 2942, 2865, 1634, 1568, 1498, 1357, 1269, 1159, 1069, 954, 840
**EI-MS [m/z]:** 179[M]^{+•}, 148 [M-CH₂OH]^{+•}

### Beispiel 17 (E)-2-(((5-(hydroxymethyl)furan-2-yl)methylene)amino)-2-methylpropan-1-ol:

In einem Eppendorf-tube werden 116mg 5-Hydroxymethyl-2-Furfural (0,92mmol) eingewogen und 57mg 2-amino-2-methylpropan-1-ol (0,92mmol) werden dazugegeben. Das Reaktionsgemisch wird für 2h bei 40°C bei 800rpm geschüttelt.
**¹H NMR (500 MHz, DMSO) δ [ppm]:** 8.05, 6.79, 6.39, 5.35, 4.65, 4.42, 3.33, 3.30, 1.12.
**¹³C NMR (500 MHz, DMSO) δ [ppm]:** 157.90, 152.02, 146.48, 115.48 (d, *J* = 2.3 Hz), 109.22 (d, *J* = 2.6 Hz), 69.76, 61.61, 56.24, 24.49.
**FTIR υ [cm⁻¹]:** 3269, 2968, 2962, 2865, 1642, 1529, 1462, 1366, 1277, 1175, 1019, 795
**EI-MS [m/z]:** 197[M]^{+•}, 166 [M-CH₂OH]^{+•}

### Beispiel 18 (E)-2-(((4-(hydroxymethyl)furan-2-yl)methylene)amino)-2-methylpropan-1-ol:

In einem Eppendorf-tube werden 204mg 4-Hydroxymethyl-2-Furfural (1,62mmol) eingewogen und 100,4mg 2-amino-2-methylpropan-1-ol (1,62mmol) werden dazugegeben. Das Reaktionsgemisch wird für 2h bei 40°C bei 800rpm geschüttelt.
**¹H NMR (500 MHz, DMSO) δ [ppm]:** 8.06, 7.62, 6.82, 4.34, 3.30, 1.10.
**FTIR υ [cm⁻¹]:** 3181, 2963, 2952, 2869, 1695, 1595, 1473, 1383, 1233, 1184, 1055, 911
**EI-MS [m/z]:** 197[M]^{+•}, 166 [M-CH₂OH]^{+•}

### Beispiel 19 (E)-4-(((1-hydroxy-2-methylpropan-2-yl)imino)methyl)phenol:

In einem Eppendorf-tube werden 96,54mg Hydroxybenzaldehyd (0,79mmol) eingewogen und 49,0mg 2-amino-2-methylpropan-1-ol (0,79mmol) werden dazugegeben. Das Reaktionsgemisch wird für 2h bei 40°C bei 800rpm geschüttelt.
**¹H NMR (500 MHz, DMSO) δ [ppm]:** 8.17, 7.57, 6.77, 3.31, 1.13.
**FTIR υ [cm⁻¹]:** 3160, 2968, 2937, 2873, 1640, 1584, 1500, 1279, 1153, 1047, 913, 835
**EI-MS [m/z]:** 193[M]^{+•}, 162 [M-CH₂OH]^{+•}

### Beispiel 20 (E)-3-((1-hydroxy-2-methylpropan-2-yl)imino)-2-methylbutan-2-ol:

In einem Eppendorf-tube werden 104mg 4-Hydroxy-4-methylpentanon (0,90mmol) eingewogen und 56mg 2-amino-2-methylpropan-1-ol (0,90mmol) werden dazugegeben. Das Reaktionsgemisch wird für 2h bei 40°C bei 800rpm geschüttelt.
**¹H NMR (500 MHz, DMSO) δ [ppm]:** 3.06, 2.08, 1.26, 1.24, 1.04, 1.01, 0.88, 0.79.
**FTIR υ [cm⁻¹]:** 3346, 2968, 2953, 2872, 1666, 1593, 1468, 1360, 1219, 1182, 1055, 952, 911

### Beispiel 21 (E)-4-(1-((1-hydroxy-2-methylpropan-2-yl)imino)ethyl)phenol:

In einem Eppendorf-tube werden 103,8mg 4-Hydroxyacetophenon (0,76mmol) eingewogen und 47mg 2-amino-2-methylpropan-1-ol (0,76mmol) werden dazugegeben. Das Reaktionsgemisch wird für 2h bei 40°C bei 800rpm geschüttelt.
**¹H NMR (500 MHz, DMSO) δ [ppm]:** 8.18, 7.63, 6.73, 3.17, 2.51, 1.02.
**¹³C NMR (500 MHz, DMSO) δ [ppm]:** 164.5, 159.6, 131.9, 128.5, 127.3, 115.2, 62.2, 54.6, 15.3.
**FTIR υ [cm⁻¹]:** 3163, 2967, 2869, 1574, 1505, 1359, 1279, 1162, 1053, 906, 567.

### Synthese von Ester und Säure-Alkoholen mit Imin Sollbruchstellen:

### Allgemeine Vorschrift

In einem Reaktionsgefäß werden 1 mol-Äquivalent einer Ester-haltigen Keton Verbindung, oder einer Ester-haltigen Aldehyd Verbindung mit 1 mol-Äquivalente Aminoalkohol (2 mol-Äquivalent Aminoalkohol, wenn es sich um eine Carbonsäure Verbindung handelt) bei 40-80 °C umgesetzt.

### Beispiel 22: Methyl (E)-4-((2-hydroxyethyl)imino)pentanoate:

In einem Eppendorf-tube werden 106mg Lävulinsäuremethylester (0,82mmol) eingewogen und 51mg Ethanolamin (0,82mmol) werden dazugegeben. Das Reaktionsgemisch wird für 2h bei 40°C bei 800rpm geschüttelt.
**¹H NMR (500 MHz, DMSO) δ [ppm]:** 3.94, 3.81, 3.75, 3.17, 3.13, 2.32, 2.11, 1.37.
**FTIR υ [cm⁻¹]:** 3364, 2979, 2935, 1449, 1379, 1266, 1027, 869.
**EI-MS [m/z]:**173[M]^{+•}, 142 [M-CH₂OH] ^{+•}

### Beispiel 23: Methyl (E)-4-((1-hydroxy-2-methylpropan-2-yl)imino)pentanoate:

In einem Eppendorf-tube werden 98mg Lävulinsäuremethylester (0,75mmol) eingewogen und 73mg 2-amino-2-methylpropan-1-ol (0,75mmol) werden dazugegeben. Das Reaktionsgemisch wird für 2h bei 40°C bei 800rpm geschüttelt.
**¹H NMR (500 MHz, DMSO)** δ **[ppm]:** 3.57, 2.93, 2.58, 2.34, 2.08, 2.05, 0.89, 0.80.
**FTIR υ [cm⁻¹]:** 3289, 2963, 2871, 1736, 1592, 1359, 1213, 1160, 1057, 970, 912, 759.
**EI-MS [m/z]:**201[M]^{+•}, 170 [M-CH₂OH]^{+•}

### Beispiel 24: (E)-4-(((2-hydroxyethyl)imino)methyl)benzoic acid:

In einem Eppendorf-tube werden 104mg 4-Carboxybenzaldehyd (0,69mmol) eingewogen und 86mg Ethanolamin (1,38mmol) werden dazugegeben. Das Reaktionsgemisch wird für 2h bei 40°C bei 800rpm geschüttelt.
**¹H NMR (500 MHz, DMSO) δ [ppm]:** 8.32, 7.90, 7.66, 3.85.
**¹³C NMR (500 MHz, DMSO) δ [ppm]:** 170.1, 162.0, 141.6, 137.1, 129.5, 127.4, 63.8, 61.1.
**FTIR υ [cm⁻¹]:** 3182, 2935, 2855, 1646, 1592, 1541, 1375, 1076, 1026, 948, 870, 782

### Beispiel 25: (E)-4-(((1-hydroxy-2-methylpropan-2-yl)imino)methyl)benzoic acid:

In einem Eppendorf-tube werden 214mg eines gemisches aus Methyl 9-formyloctadecanoate und methyl 10-formyloctadecanoate (dieses gewinnt man aus der Hydroformulierung des bekannten Ölsäuremethylesters) (0,60mmol) eingewogen und 37,2 mg Ethanolamin (0,60mmol) werden dazugegeben. Das Reaktionsgemisch wird für 2h bei 40°C bei 800rpm geschüttelt.
**¹H NMR (500 MHz, DMSO) δ [ppm]:** 7.45, 4.24, 3.78, 3.66, 3.51, 3.23, 2.98, 2.85, 2.29, 2.18, 1.60, 1.40, 1.25, 0.87.
**FTIR υ [cm⁻¹]:** 3247, 2923, 2852, 1740, 1669, 1457, 1436, 1241, 1196, 1171, 1061, 866, 722.

### Polymerisation von Diolen zu Polyurethanen

### Allgemeine Vorschrift

In einem Reaktionsgefäß werden 1mol Äquivalent eines Diols mit Imin Sollbruchstelle mit 1 bis 2 Äquivalenten eines Diisocyanats umgesetzt. Dem Gemisch kann zwischen 0-50 mol% Wasser für Aufschäumungszwecke beigefügt werden.

### Beispiel 8a:

In einem Reaktionsgefäß werden 5g des Diols aus Beispiel 8 mit 378 mg 4,4`-Methylenbisphenyldiisocyanat (1.2 mol äq) versetzt und stark umgerührt. Nach etwa 15min erhält man eine feste Polymermasse.
**¹H NMR (500 MHz, DMSO) δ [ppm]:** 8.53, 7.41 - 7.32, 7.10, 3.80, 3.56 - 3.40, 3.34 - 3.29, 1.49, 1.04.
**FTIR υ [cm⁻¹]:** 3331, 2970, 2867, 1715, 1641, 1598, 1538, 1510, 1455, 1372, 1342, 1305, 1234, 1091, 1015, 924, 818
**GPC-Molmassenanalyse [g/mol]:** Mₙ = 24420; M_{w} = 36726, Q = 1,5

### Beispiel 8b:

In einem Reaktionsgefäß werden 5g des Diols aus Beispiel 8 mit 10mg Wasser und 600 mg 4,4'-Methylenbisphenyldiisocyanat versetzt und stark umgerührt. Nach etwa 30min erhält man einen festen Polymerschaum.
**¹H NMR (500 MHz, DMSO) δ [ppm]:** 8.52, 8.06, 7.34, 7.13 - 7.03, 4.13 - 3.89, 3.56 - 3.46, 3.43, 3.32, 1.49, 1.04.
**FTIR υ [cm⁻¹]:** 3331, 2970, 2867, 1715, 1642, 1598, 1539, 1510, 1435, 1373, 1342, 1304, 1234, 1092, 1016, 924, 818
**GPC-Molmassenanalyse [g/mol]:** Mₙ = 12860; M_{w} = 18055, Q = 1,7

### Beispiel 8c:

In einem Reaktionsgefäß werden 5g des Diols aus Beispiel 8 mit 334 mg 2,4-Toluendiisocyanat versetzt und stark umgerührt. Nach etwa 15min erhält man eine feste Polymermasse.
**¹H NMR (500 MHz, DMSO) δ [ppm]:** 9.27 - 5.40, 3.72 - 2.94, 1.04, 0.93, 0.88.
**FTIR υ [cm⁻¹]:** 3342, 2970, 2930, 2867, 1718, 1640, 1601, 1539, 1453,1373, 1342, 1298, 1236, 1096, 1013, 925
**GPC-Molmassenanalyse [g/mol]:** Mₙ = 23746; M_{w} = 27657, Q = 1,2

### Beispiel 8d:

In einem Reaktionsgefäß werden 5g des Diols aus Beispiel 8 mit 10mg Wasser und 500 mg 2,4-Toluendiisocyanat versetzt und stark umgerührt. Nach etwa 30min erhält man einen festen Polymerschaum.
**¹H NMR (500 MHz, DMSO) δ [ppm]:** 8.05 - 5.49, 4.92 - 4.52, 4.04, 3.76 - 2.92, 1.49, 1.04, 0.98 - 0.65.
**FTIR υ [cm⁻¹]:** 3308, 2962, 2930, 2867, 1715, 1641, 1541, 1452, 1378, 1297, 1237, 1093, 1012, 925
**GPC-Molmassenanalyse [g/mol]:** Mₙ = 11152; M_{w} = 11305, Q = 1,01

### Beispiel 9a:

In einem Reaktionsgefäß werden 5 g des Diols aus Beispiel 9 mit 505 mg Hexamethylendiisocyanat versetzt und stark umgerührt. Nach etwa 2h erhält man eine feste Polymermasse.
TGA: T_{d}^{5%} = 261°C T_{d}^{30%} = 353°C

### Beispiel 9b:

In einem Reaktionsgefäß werden 5 g des Diols aus Beispiel 9 mit 610 mg 2,4-Toluoldiisocyanat versetzt und stark umgerührt. Nach etwa 15min erhält man eine feste Polymermasse.
TGA: T_{d}^{5%} = 233°C T_{d}^{30%} = 354°C

### Beispiel 10:

In einem Reaktionsgefäß werden 5 g des Diols aus Beispiel 10 mit 10 mg Wasser und 500 mg 4,4'-Methylenbisphenyldiisocyanat versetzt und stark umgerührt. Nach etwa 30min erhält man einen festen Polymerschaum.
**¹H NMR (500 MHz, DMSO) δ [ppm]:** 8.71 - 7.96, 7.76, 7.67, 7.40, 7.31, 7.07 - 6.97, 6.96-6.80, 6.51, 6.02, 4.29, 4.07, 3.86, 3.79 - 3.74, 3.65, 3.46, 3.31, 3.18, 3.10, 2.84 - 2.79, 1.58-1.51, 0.95, 0.88.

### Depolymerisation von Polyurethanen zu Diolen

### Allgemeine Vorschrift 1:

150g eines zerkleinerten ketiminhaltigen Polyurethans werden in 1L Aminoalkohol bei 25°C - 80°C für 2-20h behandelt. Zur besseren Löslichkeit des Polyurethans können 1-50-w% eines organischen Lösungsmittels eingesetzt werden. Zur besseren Abbaubarkeit können heterogene und homogene saure Brønsted oder Lewis Katalysatoren eingesetzt werden.

### Beispiel, ausgehend von Polymer 8d:

4,42g des Polymers gemäß Beispiel 8d werden mit 30ml Ethanolamin bei 60°C für 5h erwärmt.

Von der Diolkomponente lt. Beispiel 8, dem Polymer lt. Beispiel 8d sowie dem Depolymerisationsprodukt wurden anschließend GPC-Molmassenanalysen durchgeführt.

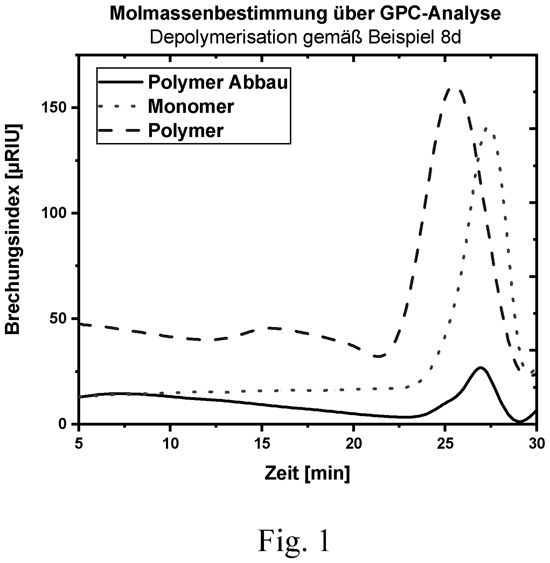

Die Ergebnisse sind in Fig. 1 zu sehen, ausgehend davon ergibt sich folgende Molmassenanalyse:

### GPC Molmassenalavse [g/mol]

Diolkomponente lt Beispiel 8: Mₙ = 4884, M_{w} = 5987
Polymer lt. Beispiel 8d: = 12860, M_{w} = 18055
Depolymerisiertes Polymer: Mₙ = 5537, M_{w} = 5775

### Allgemeine Vorschrift 2:

150g eines zerkleinerten Aldimin haltigen Polyurethans werden in 1L 1M HCl bei 25°C - 80°C für 2-24h behandelt. Zur besseren Löslichkeit des Polyurethans können 1-50-w% eines organischen Lösungsmittels eingesetzt werden.

### Beispiel 10:

3,46g des Polymers gemäß Beispiel 10 werden mit 30ml 1M HCl bei 25°C für 5h bei 800rpm geschüttelt.

### Analyse der Wässrigen Phase nach dem Säureabbau

**¹H NMR (500 MHz, D₂O) δ [ppm]:** 10.52, 8.52, 7.79, 4.25, 3.28, 1.71.

### Feststoffanalyse nach dem Säureabbau (MDI-Diamin Fragment)

**¹H NMR (500 MHz, DMSO) δ [ppm]:** 7.27, 7.01, 3.55 - 3.44, 3.41, 3.12.

### Allgemeine Vorschrift 3:

150g eines zerkleinerten Aldimin oder Ketimin haltigen Polyurethans werden in 1L 1-5M NH₃-Lösung bei 25°C - 80°C für 2-24h behandelt. Zur besseren Löslichkeit des Polyurethans können 1-50-w% eines organischen Lösungsmittels eingesetzt werden.

Untersuchung der Zersetzungstemperaturen erfindungsgemäßer Polymere.

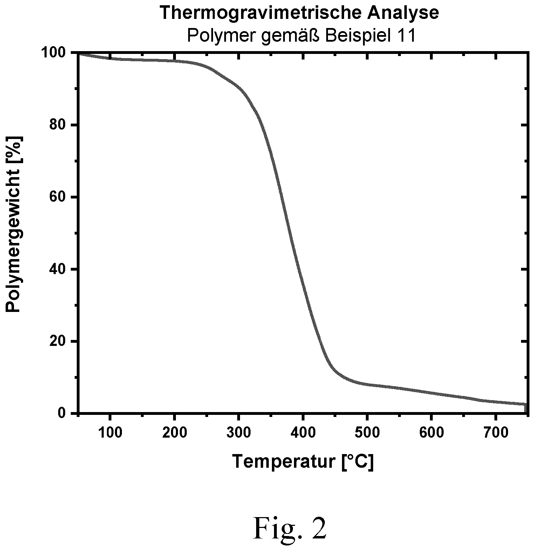

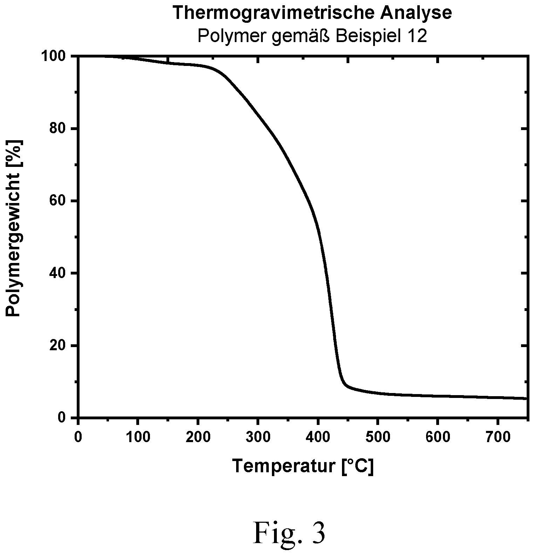

Fig. 2 und 3 beschreiben die Zersetzungstemperaturen (TGA = Thermogravimetrische Analyse) der Polymere lt. Beispiel 9a bzw. 9b. Sie beschreibt in Abhängigkeit der Temperatur wie stark das Gewicht des Polymers durch Ausgasungsprozesse (thermische Zersetzung) abnimmt.

Wie gut zu sehen sind, verfügen diese Polymere über eine ausgezeichnete Stabilität.

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

## Patentansprüche

1. Polymer, umfassend mindestens einen Abschnitt mit einer sich wiederholenden Einheit, welcher eine Imingruppe umfasst.

2. Polymer gemäß Anspruch 1, wobei der mindestens eine Abschnitt mit einer sich wiederholenden Einheit zwei oder mehr Imingruppen umfasst.

3. Polymer gemäß Anspruch 1 oder 2, wobei ein Kohlenstoffatom in α-Stellung zum Kohlenstoffatom der Imingruppe (d.h. als Teil der Reste R' oder R") unsubstitutiert oder Teil eines (hetero)aromatischen Rings ist.

4. Polymer gemäß einem der Ansprüche 1 bis 3, wobei das Kohlenstoffatom in α-Stellung zum Stickstoff der Imingruppe (= Rest R‴) Teil eines (hetero)aromatischen Rings ist und/oder einen elektronenziehenden oder verzweigten aliphatischen Substituenten besitzt.

5. Polymer gemäß einem der Ansprüche 1 bis 4, wobei das Kohlenstoffatom in α-Stellung zum Stickstoff der Imingruppe (= Rest R‴) Teil eines (hetero)aromatischen Rings ist oder einen verzweigten aliphatischen Substituenten besitzt

6. Polymer gemäß einem der Ansprüche 1 bis 5, wobei der mindestens einen Abschnitt mit einer sich wiederholenden Einheit eine Ester, Amin, Urethan, Harnstoff- oder Carbonatgruppe umfasst.

7. Polymer gemäß einem der Ansprüche 1 bis 6, wobei mindestens einen Abschnitt mit einer sich wiederholenden Einheit die folgende Struktur besitzt:
-CR₁=N-R₂-N=CR₃-R₄-
wobei R₁ und R₃ unabhängig voneinander ausgewählt sind aus Wasserstoff oder C₁-C₄-Alkyl sowie R₂ und R₄ unabhängig voneinander unsubstituierte oder alkylsubstituierte Alkylgruppen sind, welche von aromatischen oder heteroaromatischen oder Ethergruppen unterbrochen sein können, wobei -O-O-Bindungen ausgeschlossen sind, sowie unsubstituiertem oder alkylsubstiuertem Aryl oder 5- oder 6-Ring Heteroaryl.

8. Polymer gemäß einem der Ansprüche 1 bis 7, wobei mindestens einen Abschnitt mit einer sich wiederholenden Einheit die folgende Struktur besitzt:
-R₅-CR₁=N-R₂-N=CR₃-R₄-W-R₆₋W-
wobei R₁ bis R₄ wie zuvor definiert sind, W für jedes W unabhängig ausgewählt ist aus -O-C(O)-, -C(O)-O, O-C(O)-O, NH-C(O)-, -C(O)-NH-, -NH-C(O)-O-, -O-C(O)-NH- und -NH-C(O)-NH-, sowie R₅ und R₆ unabhängig ausgewählt sind aus unsubstituiertem oder alkylsubstituierten Alkyl, welche von aromatischen oder heteroaromatischen oder Ethergruppen unterbrochen sein können, wobei -O-O-Bindungen ausgeschlossen sind, Aryl oder Heteroaryl.

9. Polymer gemäß einem der Ansprüche 1 bis 8, wobei mindestens einen Abschnitt mit einer sich wiederholenden Einheit die folgende Struktur besitzt:
-R₂-N=CR₁-R₄-W-R₅-U-R₇-U-R₈-W-R₄-CR₃=N-R₂₋W-R₆-W-
wobei R₁ bis R₆ und W wie zuvor definiert sind, U ausgewählt ist aus C(O)-, -O-C(O)- und -NH-C(O)- und R₇ ausgewählt ist aus Diol oder Polyol (so dass eine Ester- Carbonat oder Urethaneinheit entsteht).

10. Verwendung eines Polymers gemäß einem der Ansprüche 1 bis 9 für einen oder mehrere der folgenden Anwendungsbereiche:
- Schuhsohlen, insbesondere als Material für die Innensohle, Zwischensohle, Laufsohle
- Matratzen/Polstermaterial
- Klebstoffe
- Kabelummantelungen
- Bodenbeläge
- Isolierungsmaterial/Dicht- und Dämmstoffe
- Farben & Lacke
- Textilstoffe
